# EUROPEAN PATENT APPLICATION

(11) **EP 2 535 539 A1**
(43) Date of publication of application: **19.12.2012**
(21) Application number: 11742295.6
(22) Date of filing: 10.02.2011
(51) Int. Cl.: F02B 37/20, F01N 3/08, F01N 3/20, F02B 37/00, F02B 37/10, F02B 37/12, F02B 37/18

(54) **MARINE INTERNAL COMBUSTION ENGINE AND OPERATING METHOD THEREOF**

(30) Priority: 12.02.2010 JP 2010028925
(71) Applicant: Mitsubishi Heavy Industries, Ltd., Tokyo 108-8215 (JP)
(72) Inventor: SHIRAISHI, Keiichi, Tokyo 108-8215 (JP)
(74) Representative: HOFFMANN EITLE
(86) International application number: PCT/JP2011/052851
(87) International publication number: WO 2011/099552

(57) **Abstract**

In order to achieve the downsizing of a nozzle part and decrease fuel consumed by the nozzle part, provided is an operating method of a marine internal combustion engine, the marine internal combustion engine including: a combustion chamber that receives supply of air and fuel to generate rotational driving force and discharge exhaust gas; a supercharger that is driven by the exhaust gas discharged from the combustion chamber to supercharge the air supplied to the combustion chamber; a denitration unit that houses a catalyst that reduces nitrogen oxides contained in the exhaust gas discharged from the supercharger; a burner unit that is disposed between the combustion chamber and the supercharger, and injects the fuel to the exhaust gas to combust the fuel; and a power generation unit that is driven by the supercharger to generate electric power, the operating method including increasing/decreasing an amount of power generated by the power generation unit such that a pressure of the supercharged air supplied from the supercharger to the combustion chamber is constant irrespective of a temperature change in the air taken in by the supercharger, in a case where an engine load is the same.

## Description

### {Technical Field}

The present invention relates to, particularly, a marine internal combustion engine that is suitably applied to a two-stroke low-speed diesel engine and an operating method of the marine internal combustion engine.

### {Background Art}

Along with a growing interest in environmental conservation in recent years, nitrogen oxides (hereinafter, expressed as '"NOx") need to be decreased, the NOx being contained in exhaust gas discharged from a main engine, for example, a two-stroke low-speed diesel engine of a marine vessel. A generally known method for decreasing NOx involves exposing such exhaust gas of the diesel engine to a denitration catalyst (see, for example, PTL 1 and PTL 2).
Here, a generally used denitration catalyst is based on selective catalytic reduction (SCR) in which NOx is reduced to nitrogen with the aid of ammonia or the like as a reducing agent.

### {Citation List}

### {Patent Literature}

{PTL1} Japanese Examined Patent Application, Publication No. Hei 07-006380
{PTL 2} Japanese Unexamined Patent Application, Publication No. Hei 05-288040

### {Summary of Invention}

### {Technical Problem}

If such a two-stroke low-speed diesel engine as described above is provided with a supercharger turbine, however, the temperature of exhaust gas discharged from the supercharger turbine is equal to or less than 300°C.
In general, it is preferable that reduction reaction of NOx using a denitration catalyst be performed at a temperature from 300°C to 320°C or higher. If exhaust gas having a temperature lower than this range is exposed to the denitration catalyst, unfortunately, the denitration catalyst deteriorates in a short time, and a NOx decrease effect is smaller.

In order to solve the above-mentioned problem, the following method is known. That is, a denitration catalyst is disposed between a two-stroke low-speed diesel engine and a supercharger turbine, in other words, the denitration catalyst is disposed upstream of an entrance of the supercharger turbine. Then, high-temperature exhaust gas before its drop in temperature is introduced into the denitration catalyst.

If the denitration catalyst is disposed upstream of the entrance of the supercharger turbine, however, the denitration catalyst has a heat capacity to act as a buffer. Hence, in the case where a load transiently varies at the time of, for example, the start or stop of the diesel engine, unfortunately, the number of revolutions of the supercharger turbine does not follow or falls behind the variations of the load.

In contrast, the following method is also conceivable. That is, a denitration catalyst is disposed downstream of a supercharger turbine, a burner that combusts fuel is disposed between the supercharger turbine and the denitration catalyst, and the temperature of exhaust gas to be introduced into the denitration catalyst is raised.
Unfortunately, the energy of the fuel combusted by the burner is used only to raise the temperature of the exhaust gas, and is released to the outside of the system without being collected. Hence, this energy is not effectively utilized.

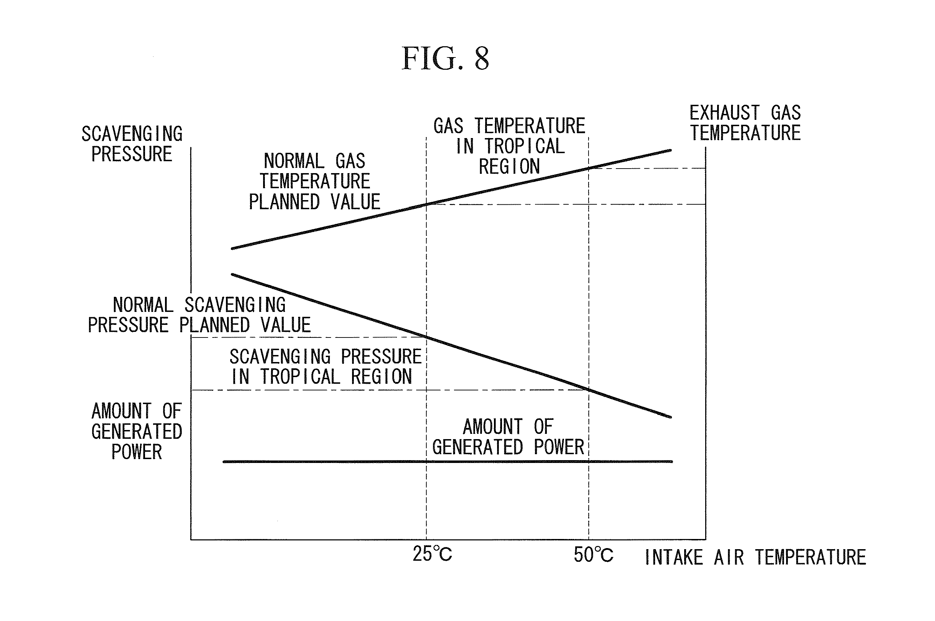

In view of the above, in order to solve the above-mentioned problem, proposed is an internal combustion engine with a denitration unit, the internal combustion engine including a burner unit disposed between a combustion chamber and a supercharger in the diesel engine, the burner unit injecting fuel to exhaust gas to combust the fuel and thus raising the temperature of the exhaust gas.
The internal combustion engine with the denitration unit is mounted on a marine vessel, and is used as, for example, an internal combustion engine for a main engine, and the amount of power generated by the internal combustion engine is set to be constant as illustrated in Fig. 8 irrespective of a temperature change in air taken in (suctioned) by the supercharger. In this case, if the temperature of the air taken in by the supercharger becomes higher, the pressure (scavenging pressure) of supercharged air supplied from the supercharger to the combustion chamber decreases. On the other hand, if the temperature of the air taken in by the supercharger becomes lower, the pressure of the supercharged air supplied from the supercharger to the combustion chamber increases. As a result, the higher temperature of the air taken in by the supercharger leads to a rise in temperatures of: exhaust gas generated in the combustion chamber; and exhaust gas that flows into an exhaust confluence unit (into which exhaust gases flow, the exhaust gases being respectively discharged from a plurality of combustion chambers through exhaust pipes). On the other hand, the lower temperature of the air taken in by the supercharger leads to a drop in temperatures of: the exhaust gas generated in the combustion chamber; and the exhaust gas that flows into the exhaust confluence unit. Accordingly, in the case where the temperature of the air taken in by the supercharger is high, a small amount of fuel is blown out from a nozzle part of the burner unit, and the small amount of fuel injected from the nozzle part of the burner unit is combusted. In the case where the temperature of the air taken in by the supercharger is low, a large amount of fuel is blown out from the nozzle part of the burner unit, and the large amount of fuel injected from the nozzle part of the burner unit is combusted. As a result, the nozzle part of the burner unit is required to have a capacity (size) that is large enough to blow out the large amount of fuel in the case where the temperature of the air taken in by the supercharger is low. Further, in the case where the temperature of the air taken in by the supercharger is low, the large amount of fuel is blown out from the nozzle part of the burner unit, and hence such a large amount of fuel is required.

The present invention, which has been made in order to solve the above-mentioned problems, has an object to provide a marine internal combustion engine that can achieve the downsizing of a nozzle part and can decrease fuel consumed by the nozzle part, as well as an operating method of the marine internal combustion engine.

### {Solution to Problem}

In order to achieve the above-mentioned object, the present invention provides the following solutions.
A first aspect of the present invention provides an operating method of a marine internal combustion engine, the marine internal combustion engine including: a combustion chamber that receives supply of air and fuel to generate rotational driving force and discharge exhaust gas; a supercharger that is driven by the exhaust gas discharged from the combustion chamber to supercharge the air supplied to the combustion chamber; a denitration unit that houses a catalyst that reduces nitrogen oxides contained in the exhaust gas discharged from the supercharger; a burner unit that is disposed between the combustion chamber and the supercharger, and injects the fuel to the exhaust gas to combust the fuel; and a power generation unit that is driven by the supercharger to generate electric power, the operating method including increasing/decreasing an amount of power generated by the power generation unit such that a pressure of the supercharged air supplied from the supercharger to the combustion chamber is constant irrespective of a temperature change in the air taken in by the supercharger, in a case where an engine load is the same.

A second aspect of the present invention provides a marine internal combustion engine including: a combustion chamber that receives supply of air and fuel to generate rotational driving force and discharge exhaust gas; a supercharger that is driven by the exhaust gas discharged from the combustion chamber to supercharge the air supplied to the combustion chamber; a denitration unit that houses a catalyst that reduces nitrogen oxides contained in the exhaust gas discharged from the supercharger; a burner unit that is disposed between the combustion chamber and the supercharger, and injects the fuel to the exhaust gas to combust the fuel; and a power generation unit that is driven by the supercharger to generate electric power, the marine internal combustion engine further including a control unit that outputs, to the power generation unit, control signals for increasing/decreasing an amount of generated power such that a pressure of the supercharged air supplied from the supercharger to the combustion chamber is constant irrespective of a temperature change in the air taken in by the supercharger, in a case where an engine load is the same.

A third aspect of the present invention provides an operating method of a marine internal combustion engine, the marine internal combustion engine including: a combustion chamber that receives supply of air and fuel to generate rotational driving force and discharge exhaust gas; a supercharger that is driven by the exhaust gas discharged from the combustion chamber to supercharge the air supplied to the combustion chamber; a denitration unit that houses a catalyst that reduces nitrogen oxides contained in the exhaust gas discharged from the supercharger; a burner unit that is disposed between the combustion chamber and the supercharger, and injects the fuel to the exhaust gas to combust the fuel; a power generating turbine unit to which the exhaust gas branched from between the combustion chamber and the supercharger is guided, the power generating turbine unit generating electric power on a basis of the guided exhaust gas; and a regulator that regulates a flow rate of the exhaust gas supplied to the power generating turbine unit, the operating method including increasing/decreasing the flow rate of the exhaust gas supplied to the power generating turbine unit such that a pressure of the supercharged air supplied from the supercharger to the combustion chamber is constant irrespective of a temperature change in the air taken in by the supercharger, in a case where an engine load is the same.

A fourth aspect of the present invention provides a marine internal combustion engine including: a combustion chamber that receives supply of air and fuel to generate rotational driving force and discharge exhaust gas; a supercharger that is driven by the exhaust gas discharged from the combustion chamber to supercharge the air supplied to the combustion chamber; a denigration unit that houses a catalyst that reduces nitrogen oxides contained in the exhaust gas discharged from the supercharger; a burner unit that is disposed between the combustion chamber and the supercharger, and injects the fuel to the exhaust gas to combust the fuel; a power generating turbine unit to which the exhaust gas branched from between the combustion chamber and the supercharger is guided, the power generating turbine unit generating electric power on a basis of the guided exhaust gas; and a regulator that regulates a flow rate of the exhaust gas supplied to the power generating turbine unit, the marine internal combustion engine further including a control unit that outputs, to the regulator, control signals for increasing/decreasing the flow rate of the exhaust gas supplied to the power generating turbine unit such that a pressure of the supercharged air supplied from the supercharger to the combustion chamber is constant irrespective of a temperature change in the air taken in by the supercharger, in a case where an engine load is the same.

A fifth aspect of the present invention provides an operating method of a marine internal combustion engine, the marine internal combustion engine including: a combustion chamber that receives supply of air and fuel to generate rotational driving force and discharge exhaust gas; a supercharger that is driven by the exhaust gas discharged from the combustion chamber to supercharge the air supplied to the combustion chamber; a denitration unit that houses a catalyst that reduces nitrogen oxides contained in the exhaust gas discharged from the supercharger; a burner unit that is disposed between the combustion chamber and the supercharger, and injects the fuel to the exhaust gas to combust the fuel; a bypass unit that branches part of the exhaust gas from between the combustion chamber and the burner unit, and causes the part of the exhaust gas to flow into between the supercharger and the denitration unit; and a regulator that regulates a flow rate of the exhaust gas flowing through the bypass unit, the operating method including increasing/decreasing the flow rate of the exhaust gas flowing through the bypass unit such that a pressure of the supercharged air supplied from the supercharger to the combustion chamber is constant irrespective of a temperature change in the air taken in by the supercharger, in a case where an engine load is the same.

A sixth aspect of the present invention provides a marine internal combustion engine including: a combustion chamber that receives supply of air and fuel to generate rotational driving force and discharge exhaust gas; a supercharger that is driven by the exhaust gas discharged from the combustion chamber to supercharge the air supplied to the combustion chamber; a denitration unit that houses a catalyst that reduces nitrogen oxides contained in the exhaust gas discharged from the supercharger; a burner unit that is disposed between the combustion chamber and the supercharger, and injects the fuel to the exhaust gas to combust the fuel; a bypass unit that branches part of the exhaust gas from between the combustion chamber and the burner unit, and causes the part of the exhaust gas to flow into between the supercharger and the denitration unit; and a regulator that regulates a flow rate of the exhaust gas flowing through the bypass unit, the marine internal combustion engine further including a control unit that outputs, to the regulator, control signals for increasing/decreasing the flow rate of the exhaust gas flowing through the bypass unit such that a pressure of the supercharged air supplied from the supercharger to the combustion chamber is constant irrespective of a temperature change in the air taken in by the supercharger, in a case where an engine load is the same.

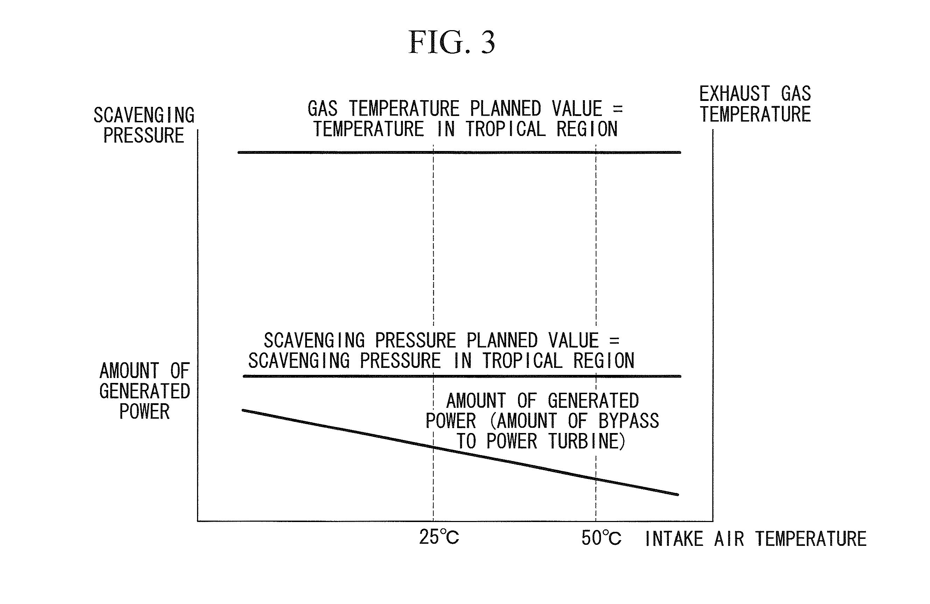

With the marine internal combustion engine and the operating method thereof according to each of the above-mentioned aspects of the present invention, for example, as illustrated in Fig. 3, in the case where the engine load is the same, the temperatures of the exhaust gas generated in the combustion chamber and the exhaust gas that flows into the exhaust confluence unit are kept constant irrespective of a temperature change in the air taken in by the supercharger. Hence, the amount of fuel injected from the nozzle part of the burner unit can be kept (substantially) constant irrespective of the temperature change in the air taken in by the supercharger. Then, the fuel consumed by the nozzle part can be decreased, and the downsizing of the nozzle part can be achieved.

### {Advantageous Effects of Invention}

The marine internal combustion engine and the operating method thereof according to the present invention produce effects of achieving the downsizing of the nozzle part and decreasing the fuel consumed by the nozzle part.

### {Brief Description of Drawings}

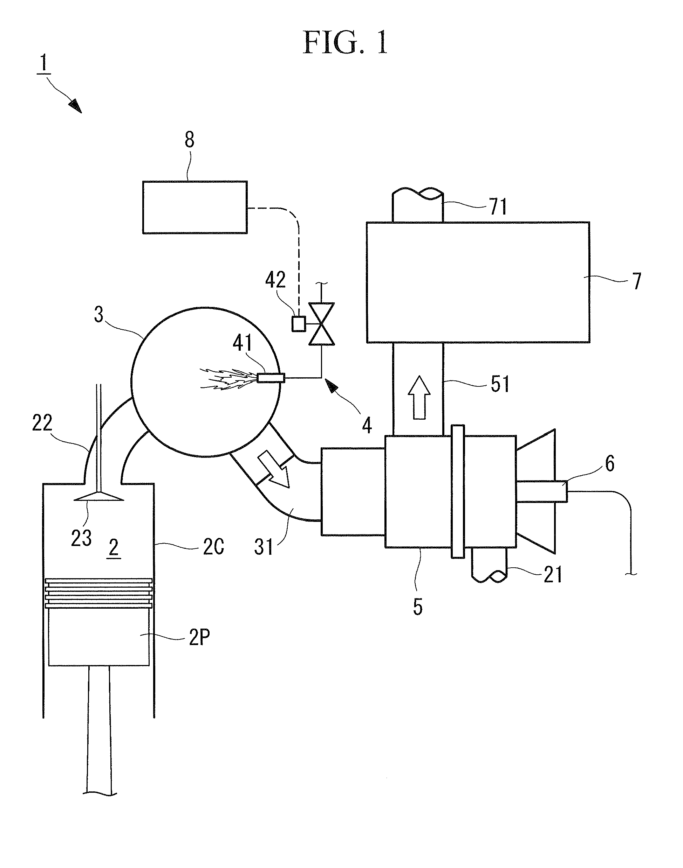

{Fig. 1}
   Fig. 1 is a schematic view for describing a configuration of a marine internal combustion engine according to a first embodiment of the present invention.
{Fig. 2}
   Fig. 2 is a block diagram for describing a configuration of a control unit in Fig. 1.
{Fig. 3}
   Fig. 3 shows a graph for describing an operating method of a marine internal combustion engine according to the present invention.
{Fig. 4}
   Fig. 4 is a schematic view for describing a configuration of a marine internal combustion engine according to a second embodiment of the present invention.
{Fig. 5}
   Fig. 5 is a block diagram for describing a configuration of a control unit in Fig. 3.
{Fig. 6}
   Fig. 6 is a schematic view for describing a configuration of a marine internal combustion engine according to a third embodiment of the present invention.
{Fig. 7}
   Fig. 7 is a block diagram for describing a configuration of a control unit in Fig. 5.
{Fig. 8}
   Fig. 8 shows a graph for describing an operating method of a conventional internal combustion engine with a denitration unit.

### {Description of Embodiments}

### {First Embodiment}

Hereinafter, a marine internal combustion engine and an operating method thereof according to a first embodiment of the present invention are described with reference to Fig. 1 to Fig. 3.

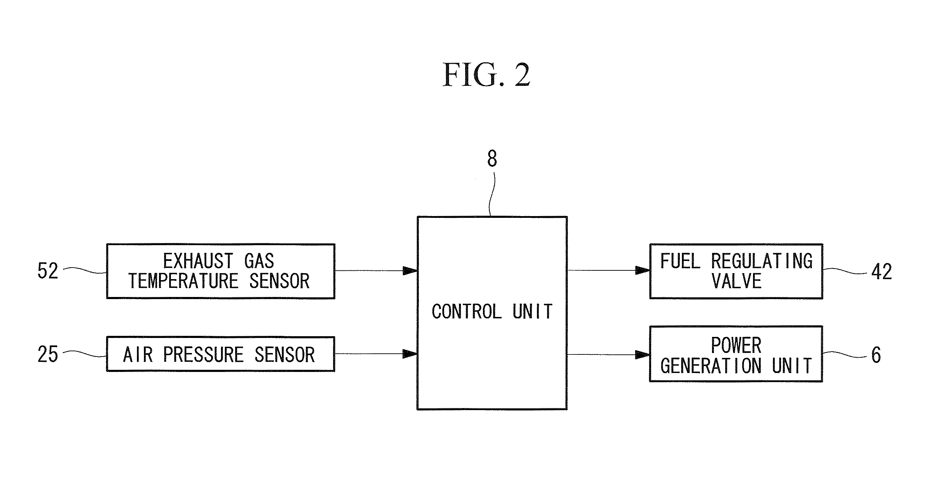

Fig. 1 is a schematic view for describing a configuration of the marine internal combustion engine according to the present embodiment. Fig. 2 is a block diagram for describing a configuration of a control unit in Fig. 1. Fig. 3 shows a graph for describing the operating method of the marine internal combustion engine according to the present invention.
In the present embodiment, description is given mainly of the case where a marine internal combustion engine (a marine internal combustion engine with a denitration unit) 1 according to the present invention is applied to a two-stroke low-speed diesel engine used as a main engine of a marine vessel.

As illustrated in Fig. 1 and Fig. 2, the marine internal combustion engine 1 mainly includes a cylinder unit 2C, a piston unit 2P, an exhaust confluence unit 3, a burner unit 4, a supercharger 5, a power generation unit 6, a denitration unit 7, and a control unit 8.

The cylinder unit 2C and the piston unit 2P constitute a combustion chamber 2.
As illustrated in Fig. 1, an intake pipe 21 and an exhaust pipe 22 are connected to the combustion chamber 2. The intake pipe 21 supplies air supercharged by the supercharger 5, and the exhaust pipe 22 discharges exhaust gas generated by the combustion of fuel. Moreover, the cylinder unit 2C is provided with a fuel nozzle (not illustrated) that blows out the fuel to the inside of the combustion chamber 2.
An exhaust valve 23 is disposed at an opening of the exhaust pipe 22 on the combustion chamber 2 side, and the exhaust valve 23 opens/closes the opening.

Note that the configurations of the cylinder unit 2C and the piston unit 2P, to which the configuration of a known two-stroke low-speed diesel engine can be applied, are not particularly limited.

The exhaust confluence unit 3 is a flow path into which exhaust gases flow, the exhaust gases being respectively discharged from the combustion chambers 2 through the exhaust pipes 22, and is a portion at which the exhaust gases join together.
As illustrated in Fig. 1, the plurality of exhaust pipes 22 and one first exhaust flow path 31 are connected to the exhaust confluence unit 3, and the burner unit 4 is provided to the exhaust confluence unit 3.

The first exhaust flow path 31 is a flow path that connects the exhaust confluence unit 3 to the supercharger 5, and guides the exhaust gas from the exhaust confluence unit 3 to the supercharger 5.

The burner unit 4 blows out the fuel to the inside of the exhaust confluence unit 3 to combust the fuel, and thus raises the temperature of the exhaust gas.
As illustrated in Fig. 1, the burner unit 4 is provided with a nozzle part 41 and a fuel regulating valve 42.

The nozzle part 41 blows out the supplied fuel toward the inside of the exhaust confluence unit 3.
The fuel regulating valve 42 is a flow regulating valve that regulates the flow rate of the fuel supplied to the nozzle part 41. As illustrated in Fig. 1 and Fig. 2, the fuel regulating valve 42 regulates the flow rate of the fuel on the basis of a control signal inputted by the control unit 8.
Note that the configurations of the nozzle part 41 and the fuel regulating valve 42, to which known configurations can be applied, are not particularly limited.

The supercharger 5 generates rotational driving force using energy such as thermal energy of the exhaust gas, and supercharges the air supplied to the combustion chamber 2, using at least part of the rotational driving force.
As illustrated in Fig. 1, the first exhaust flow path 31 and a second exhaust flow path 51, through each of which the exhaust gas flows, and the intake pipe 21, through which the supercharged air flows, are connected to the supercharger 5. Moreover, the supercharger 5 is provided with the power generation unit 6 that is rotationally driven by the supercharger 5.
Note that the supercharger 5, to which a known supercharger can be applied, is not particularly limited.

The second exhaust flow path 51 is a flow path that connects the supercharger 5 to the denitration unit 7, and guides the exhaust gas from the supercharger 5 to the denitration unit 7.

The power generation unit 6 is rotationally driven by the supercharger 5 to generate electric power. As illustrated in Fig. 2, the amount of power generated by the power generation unit 6 is controlled on the basis of a control signal inputted by the control unit 8.
Note that the configuration of the power generation unit 6, to which a known configuration can be applied, is not particularly limited.

The denitration unit 7 reduces NOx contained in the exhaust gas, and houses a catalyst that reduces NOx.
Note that the catalyst that reduces NOx, to which a known catalyst can be applied, is not particularly limited.
As illustrated in Fig. 1, the second exhaust flow path 51, through which the exhaust gas flows, and a third exhaust flow path 71 are connected to the denitration unit 7. The third exhaust flow path 71 is a flow path that guides, to the outside, the exhaust gas that has flown out from the denitration unit 7.

As illustrated in Fig. 1 and Fig. 2, the control unit 8 controls the fuel regulating valve 42 and the power generation unit 6.
The control unit 8 receives an exhaust gas temperature measured by an exhaust gas temperature sensor 52 and an air pressure measured by an air pressure sensor 25. Meanwhile, the control unit 8 outputs a control signal for controlling the opening degree of the fuel regulating valve 42 and a control signal for controlling the amount of power generated by the power generation unit 6.

The exhaust gas temperature sensor 52 is a temperature sensor disposed in the second exhaust flow path 51, and is a sensor that measures the temperature of the exhaust gas that flows out from the supercharger 5 and flows into the denitration unit 7.
The air pressure sensor 25 is a pressure sensor disposed in the intake pipe 21, and is a sensor that measures the pressure of the air that is supercharged by the supercharger 5 and supplied to the combustion chamber 2.

Next, an operation of the marine internal combustion engine 1 thus configured is schematically described.
When the marine internal combustion engine 1 is operated, as illustrated in Fig. 1, exhaust gas is generated in the combustion chamber 2, and the exhaust gas is discharged from the combustion chamber 2 into the exhaust confluence unit 3 through the exhaust pipe 22.
Fuel is blown out from the nozzle part 41 of the burner unit 4 to the inside of the exhaust confluence unit 3, and the fuel is combusted. The exhaust gas inside of the exhaust confluence unit 3 is heated by the heat that is generated when the fuel is combusted, so that the temperature of the exhaust gas rises.

The heated exhaust gas is supplied to the supercharger 5 through the first exhaust flow path 31, and rotationally drives an exhaust turbine (not illustrated) of the supercharger 5. A compressor (not illustrated) disposed coaxially with the exhaust turbine is rotationally driven together with the exhaust turbine, to thereby take in air from the outside and increase the pressure thereof. In other words, the compressor supercharges the air. The supercharged air is supplied to the combustion chamber 2 through the intake pipe 21.

Meanwhile, the temperature of the exhaust gas that has rotationally driven the exhaust turbine of the supercharger 5 drops correspondingly to the energy that the exhaust gas has lost due to the rotational driving of the exhaust turbine. The exhaust gas with such a temperature drop flows out from the supercharger 5 into the second exhaust flow path 51.

The exhaust gas that has flown into the second exhaust flow path 51 then flows into the denitration unit 7 to contact the catalyst, whereby NOx contained in the exhaust gas is reduced. After that, the exhaust gas is discharged from the denitration unit 7 to the outside through the third exhaust flow path 71.

Next, the control of the fuel regulating valve 42 and the power generation unit 6 by the control unit 8 is described.
The control unit 8 receives a measurement signal of the temperature of the exhaust gas that flows into the denitration unit 7, the temperature being measured by the exhaust gas temperature sensor 52. On the basis of the received measurement signal, the control unit 8 determines whether or not the temperature of the exhaust gas that flows into the denitration unit 7 falls within a predetermined temperature range, for example, is at least equal to or higher than a temperature at which the catalyst in the denitration unit 7 effectively works.

If the control unit 8 determines that the temperature of the exhaust gas that flows into the denitration unit 7 is lower than the predetermined temperature range, the control unit 8 outputs, to the fuel regulating valve 42, a control signal for making the valve opening degree larger in order to raise the exhaust gas temperature.
The fuel regulating valve 42 that has received this control signal makes the valve opening degree larger, to thereby increase the flow rate of the fuel supplied to the nozzle part 41. Consequently, the amount of fuel injected from the nozzle part 41 increases, and the amount of heat generated inside of the exhaust confluence unit 3 increases. As a result, the temperature of the exhaust gas inside of the exhaust confluence unit 3 rises, so that the temperature of the exhaust gas that flows into the denitration unit 7 also rises.

On the other hand, if the control unit 8 determines that the temperature of the exhaust gas that flows into the denitration unit 7 is higher than the predetermined temperature range, the control unit 8 outputs, to the fuel regulating valve 42, a control signal for making the valve opening degree smaller in order to lower the exhaust gas temperature.
The fuel regulating valve 42 that has received this control signal makes the valve opening degree smaller, to thereby decrease the flow rate of the fuel supplied to the nozzle part 41. Consequently, the amount of fuel injected from the nozzle part 41 decreases, and the amount of heat generated inside of the exhaust confluence unit 3 decreases. As a result, the temperature of the exhaust gas inside of the exhaust confluence unit 3 drops, so that the temperature of the exhaust gas that flows into the denitration unit 7 also drops.

The control unit 8 further receives a measurement signal of the pressure of the supercharged air supplied to the combustion chamber 2, the pressure being measured by the air pressure sensor 25. On the basis of the received measurement signal, the control unit 8 determines whether or not the pressure of the supercharged air supplied to the combustion chamber 2 falls within a predetermined range.
Here, the relation between an engine load and an air pressure can be exemplified as the predetermined range for the pressure of the supercharged air. The pressure of the supercharged air is set to be as low as the reliability and fuel efficiency of the engine allow, whereby the amount of fuel consumed by the burner unit 4 and the size of the nozzle part 41 can be decreased.

If the control unit 8 determines that the pressure of the supercharged air supplied to the combustion chamber 2 falls below the predetermined range, the control unit 8 outputs, to the power generation unit 6, a control signal for decreasing the amount of generated power in order to increase the pressure of the air.
The power generation unit 6 that has received this control signal decreases the amount of generated power, so that the ratio of the rotational driving force consumed by the power generation unit 6 is decreased in the rotational driving force generated by the exhaust turbine of the supercharger 5. In contrast, the ratio of the rotational driving force consumed by the compressor of the supercharger 5 is increased. Accordingly, the pressure of the supercharged air supplied from the supercharger 5 to the combustion chamber 2 increases.

On the other hand, if the control unit 8 determines that the pressure of the supercharged air supplied to the combustion chamber 2 exceeds the predetermined range, the control unit 8 outputs, to the power generation unit 6, a control signal for increasing the amount of generated power in order to decrease the pressure of the air.

The power generation unit 6 that has received this control signal increases the amount of generated power, so that the ratio of the rotational driving force consumed by the power generation unit 6 is increased in the rotational driving force generated by the exhaust turbine of the supercharger 5. In contrast, the ratio of the rotational driving force consumed by the compressor of the supercharger 5 is decreased. Accordingly, the pressure of the supercharged air supplied from the supercharger 5 to the combustion chamber 2 decreases.

Further, as illustrated in Fig. 3, the control unit 8 outputs, to the power generation unit 6, the control signals for increasing/decreasing the amount of generated power, on the basis of the temperature of the air taken in (suctioned) by the supercharger 5. That is, when the temperature of the air taken in by the supercharger 5 becomes higher, the control unit 8 outputs, to the power generation unit 6, the control signal for decreasing the amount of generated power. When the temperature of the air taken in by the supercharger 5 becomes lower, the control unit 8 outputs, to the power generation unit 6, the control signal for increasing the amount of generated power. In other words, the control unit 8 outputs, to the power generation unit 6, the control signals for increasing/decreasing the amount of generated power such that the pressure (scavenging pressure) of the supercharged air supplied from the supercharger 5 to the combustion chamber 2 is constant (in the present embodiment, a scavenging pressure corresponding to the temperature in an engine room (for example, 50°C) during marine navigation through a tropical region) irrespective of a temperature change in the air taken in by the supercharger 5.

With the marine internal combustion engine 1 and the operating method thereof according to the present embodiment, as illustrated in Fig. 3, in the case where the engine load is the same, the temperatures of the exhaust gas generated in the combustion chamber 2 and the exhaust gas that flows into the exhaust confluence unit 3 are kept constant irrespective of a temperature change in the air taken in by the supercharger 5. Hence, the amount of fuel injected from the nozzle part 41 of the burner unit 4 can be kept (substantially) constant irrespective of the temperature change in the air taken in by the supercharger 5. Then, the fuel consumed by the nozzle part 41 can be decreased, and the downsizing of the nozzle part 41 can be achieved.

Further, because the fuel is combusted by the burner unit 4, the temperature of the exhaust gas before flowing into the supercharger 5 is higher. As a result, the temperature of the exhaust gas that flows out after driving the supercharger 5 is higher compared with the case where the burner unit 4 is not provided. Accordingly, the temperature of the catalyst in the denitration unit 7 into which the exhaust gas flows is also higher, the catalyst can be prevented from deteriorating, and NOx discharged from the marine internal combustion engine 1 can be decreased.

Furthermore, the energy of the consumed fuel can be utilized more effectively compared with a method involving: disposing the burner unit 4 between the supercharger 5 and the denitration unit 7; increasing the temperature of exhaust gas that flows out from the supercharger 5; and causing the exhaust gas thus heated to flow into the denitration unit 7. This is because heated exhaust gas flows into the supercharger 5 and part of the energy of the exhaust gas is used for the air supercharging by the supercharger 5.

Still further, because the flow rate of the fuel supplied to the burner unit 4 is controlled on the basis of the temperature of the exhaust gas that flows into the denitration unit 7, the temperature of the catalyst in the denitration unit 7 can be adjusted so as to fall within a predetermined range. Accordingly, NOx discharged from the marine internal combustion engine 1 can be decreased more reliably.

Still further, because the power generation unit 6 is driven by the supercharger 5 to generate electric power, part of the energy of the heated exhaust gas is used for the air supercharging by the supercharger 5, and is also collected as electrical energy. In other words, part of the rotational driving force generated by the supercharger 5 into which the exhaust gas has flown is used for the power generation, and the other thereof is used for the air supercharging. Accordingly, the energy of the consumed fuel can be utilized further effectively.

Still further, because the amount of power generated by the power generation unit 6 is controlled on the basis of the pressure of the air supplied to the combustion chamber 2, the ratios of the respective rotational driving forces used for the power generation and for the air supercharging are controlled in the rotational driving force generated by the supercharger 5. Accordingly, the pressure of the air supplied to the combustion chamber 2 can be controlled so as to fall within a predetermined pressure range.

### {Second Embodiment}

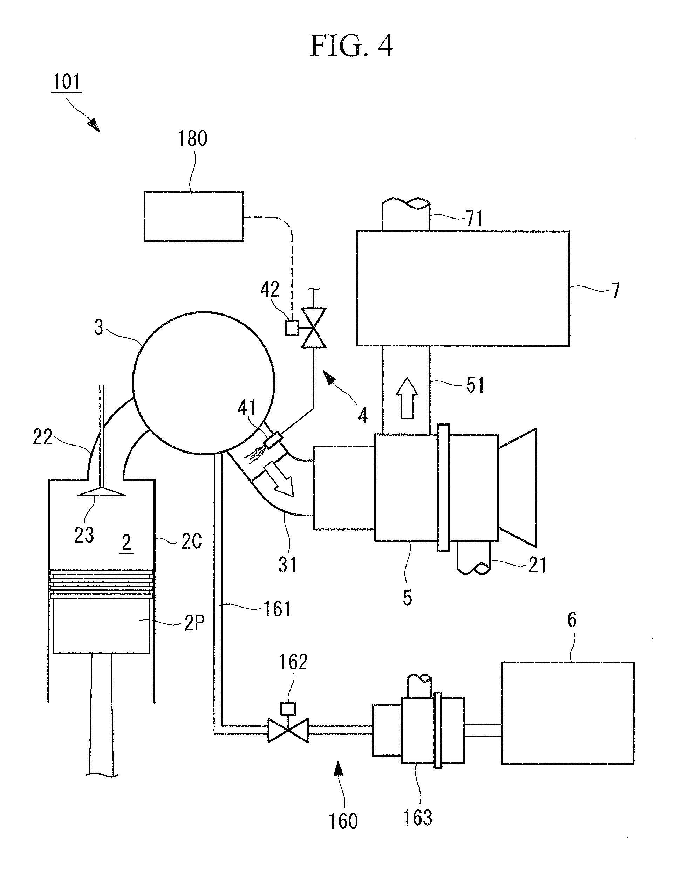

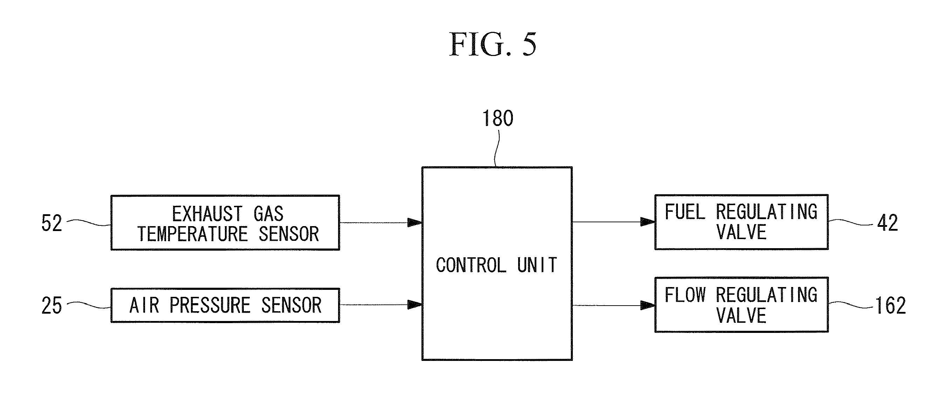

Next, a second embodiment of the present invention is described with reference to Fig. 4 and Fig. 5.
A basic configuration of a marine internal combustion engine of the present embodiment is the same as that of the first embodiment, but a peripheral configuration of a power generation unit of the present embodiment is different from that of the first embodiment. Accordingly, in the present embodiment, only the peripheral configuration of the power generation unit is described with reference to Fig. 4 and Fig. 5, and description of the other components and the like is omitted.
Fig. 4 is a schematic view for describing a configuration of the marine internal combustion engine according to the present embodiment. Fig. 5 is a block diagram for describing a configuration of a control unit in Fig. 4.
Note that the same components as those of the first embodiment are denoted by the same reference signs, and description thereof is omitted.

As illustrated in Fig. 4 and Fig. 5, a marine internal combustion engine (a marine internal combustion engine with a denitration unit) 101 mainly includes the cylinder unit 2C, the piston unit 2P, the exhaust confluence unit 3, the burner unit 4, the supercharger 5, a power generating turbine unit 160, the denigration unit 7, and a control unit 180.

Note that, in the present embodiment, description is given of an example where the nozzle part 41 of the burner unit 4 is disposed in the first exhaust flow path 31, but the nozzle part 41 may be provided to the exhaust confluence unit 3 similarly to the first embodiment, and where to dispose the nozzle part 41 is not particularly limited to this example.

As illustrated in Fig. 4, the power generating turbine unit 160 receives the supply of exhaust gas branched from the exhaust confluence unit 3, to thereby generate electric power.
The power generating turbine unit 160 is provided with a bypass flow path 161, a flow regulating valve (regulator) 162, an exhaust turbine 163, and the power generation unit 6.

The bypass flow path 161 is a flow path that connects the exhaust confluence unit 3 to the exhaust turbine 163, and guides the exhaust gas from the exhaust confluence unit 3 to the exhaust turbine 163. The flow regulating valve 162 is disposed in the bypass flow path 161.

The flow regulating valve 162 regulates the flow rate of the exhaust gas flowing through the bypass flow path 161. The flow regulating valve 162 is adapted to receive, from the control unit 180, a control signal for controlling the valve opening degree.
Note that the configuration of the flow regulating valve 162, to which a known configuration can be applied, is not particularly limited.

The exhaust turbine 163 is rotationally driven by the exhaust gas supplied through the bypass flow path 161, and rotationally drives the power generation unit 6.
Note that the exhaust turbine 163, to which a known exhaust turbine can be applied, is not particularly limited.

As illustrated in Fig. 4 and Fig. 5, the control unit 180 controls the fuel regulating valve 42 and the flow regulating valve 162.
The control unit 180 receives an exhaust gas temperature measured by the exhaust gas temperature sensor 52 and an air pressure measured by the air pressure sensor 25. Meanwhile, the control unit 180 outputs a control signal for controlling the opening degree of the fuel regulating valve 42 and a control signal for controlling the flow rate of the exhaust gas of the flow regulating valve 162.

Next, an operation of the marine internal combustion engine 101 thus configured is schematically described.
When the marine internal combustion engine 101 is operated, as illustrated in Fig. 4, exhaust gas is generated in the combustion chamber 2, and the exhaust gas is discharged from the combustion chamber 2 into the exhaust confluence unit 3 through the exhaust pipe 22.
Part of the exhaust gas in the exhaust confluence unit 3 flows into the bypass flow path 161, and is guided to the exhaust turbine 163. The exhaust turbine 163 is rotationally driven by the supplied exhaust gas, and transmits rotational driving force to the power generation unit 6. The power generation unit 6 is rotationally driven to thereby generate electric power.

In the mean time, fuel is blown out from the nozzle part 41 of the burner unit 4 to the inside of the first exhaust flow path 31, and the fuel is combusted. The exhaust gas that has flown from the exhaust confluence unit 3 into the first exhaust flow path 31 is heated by the heat that is generated when the fuel is combusted, so that the temperature of the exhaust gas rises.

The heated exhaust gas is supplied from the first exhaust flow path 31 to the supercharger 5, and rotationally drives the exhaust turbine (not illustrated) of the supercharger 5. The compressor (not illustrated) disposed coaxially with the exhaust turbine is rotationally driven together with the exhaust turbine, to thereby supercharge air.

The temperature of the exhaust gas that has rotationally driven the exhaust turbine of the supercharger 5 drops correspondingly to the energy that the exhaust gas has lost due to the rotational driving of the exhaust turbine. The exhaust gas with such a temperature drop flows out from the supercharger 5 into the second exhaust flow path 51.

The exhaust gas that has flown into the second exhaust flow path 51 then flows into the denitration unit 7 to contact the catalyst, whereby NOx contained in the exhaust gas is reduced. After that, the exhaust gas is discharged from the denitration unit 7 to the outside through the third exhaust flow path 71.

Next, the control of the fuel regulating valve 42 and the flow regulating valve 162 by the control unit 180 is described. Note that the control of the fuel regulating valve 42 by the control unit 180 is the same as that of the first embodiment, and hence description thereof is omitted.

The control unit 180 receives a measurement signal of the pressure of the supercharged air supplied to the combustion chamber 2, the pressure being measured by the air pressure sensor 25. On the basis of the received measurement signal, the control unit 180 determines whether or not the pressure of the supercharged air supplied to the combustion chamber 2 falls within a predetermined range.

If the control unit 180 determines that the pressure of the supercharged air supplied to the combustion chamber 2 falls below the predetermined range, the control unit 180 outputs, to the flow regulating valve 162, a control signal for decreasing the flow rate of the exhaust gas in order to increase the pressure of the air.

The flow regulating valve 162 that has received this control signal makes the valve opening degree smaller, to thereby decrease the flow rate of the exhaust gas, so that the ratio of the exhaust gas supplied to the exhaust turbine 163 is decreased in the exhaust gas discharged from the combustion chamber 2. In contrast, the ratio of the exhaust gas supplied to the supercharger 5 is increased.
Accordingly, the pressure of the supercharged air supplied from the supercharger 5 to the combustion chamber 2 increases.

On the other hand, if the control unit 180 determines that the pressure of the supercharged air supplied to the combustion chamber 2 exceeds the predetermined range, the control unit 180 outputs, to the flow regulating valve 162, a control signal for increasing the flow rate of the exhaust gas in order to decrease the pressure of the air.

The flow regulating valve 162 that has received this control signal increases the flow rate of the exhaust gas, so that the ratio of the exhaust gas supplied to the exhaust turbine 163 is increased in the exhaust gas discharged from the combustion chamber 2. In contrast, the ratio of the exhaust gas supplied to the supercharger 5 is decreased.
Accordingly, the pressure of the supercharged air supplied from the supercharger 5 to the combustion chamber 2 decreases.

Further, as illustrated in Fig. 3, the control unit 180 outputs, to the flow regulating valve 162, the control signals for increasing/decreasing the flow rate of the exhaust gas (amount of generated power), on the basis of the temperature of the air taken in (suctioned) by the supercharger 5. That is, when the temperature of the air taken in by the supercharger 5 becomes higher, the control unit 180 outputs, to the flow regulating valve 162, the control signal for decreasing the flow rate of the exhaust gas (amount of generated power). When the temperature of the air taken in by the supercharger 5 becomes lower, the control unit 180 outputs, to the flow regulating valve 162, the control signal for increasing the flow rate of the exhaust gas (amount of generated power). In other words, the control unit 180 outputs, to the flow regulating valve 162, the control signals for increasing/decreasing the flow rate of the exhaust gas (amount of generated power) such that the pressure (scavenging pressure) of the supercharged air supplied from the supercharger 5 to the combustion chamber 2 is constant (in the present embodiment, a scavenging pressure corresponding to the temperature in an engine room (for example, 50°C) during marine navigation through a tropical region) irrespective of a temperature change in the air taken in by the supercharger 5.

With the marine internal combustion engine 101 and the operating method thereof according to the present embodiment, as illustrated in Fig. 3, in the case where the engine load is the same, the temperatures of the exhaust gas generated in the combustion chamber 2 and the exhaust gas that flows into the exhaust confluence unit 3 are kept constant irrespective of a temperature change in the air taken in by the supercharger 5. Hence, the amount of fuel injected from the nozzle part 41 of the burner unit 4 can be kept (substantially) constant irrespective of the temperature change in the air taken in by the supercharger 5. Then, the fuel consumed by the nozzle part 41 can be decreased, and the downsizing of the nozzle part 41 can be achieved.

Further, because part of the exhaust gas is guided to the power generating turbine unit 160 and electric power is thus generated, part of the energy of the exhaust gas can be used for the air supercharging by the supercharger 5, and can also be collected as electrical energy.

Furthermore, because the flow rate of the exhaust gas guided to the power generating turbine unit 160 is regulated on the basis of the pressure of the air supplied to the combustion chamber 2, the ratios of the respective exhaust gases used for the air supercharging and for the power generation are adjusted in the exhaust gas discharged from the combustion chamber 2. Accordingly, the pressure of the air supplied from the supercharger 5 to the combustion chamber 2 is controlled so as to fall within a predetermined pressure range.

Still further, because the exhaust gas is branched before being heated by the burner unit 4, a difference between: the temperature of the exhaust gas guided to the power generating turbine unit 160; and an atmospheric temperature around the bypass flow path 161 can be smaller compared with the case where the exhaust gas is branched after being heated. Accordingly, a heat loss of the exhaust gas caused between the exhaust confluence unit 3 and the power generating turbine unit 160 can be suppressed.

### {Third Embodiment}

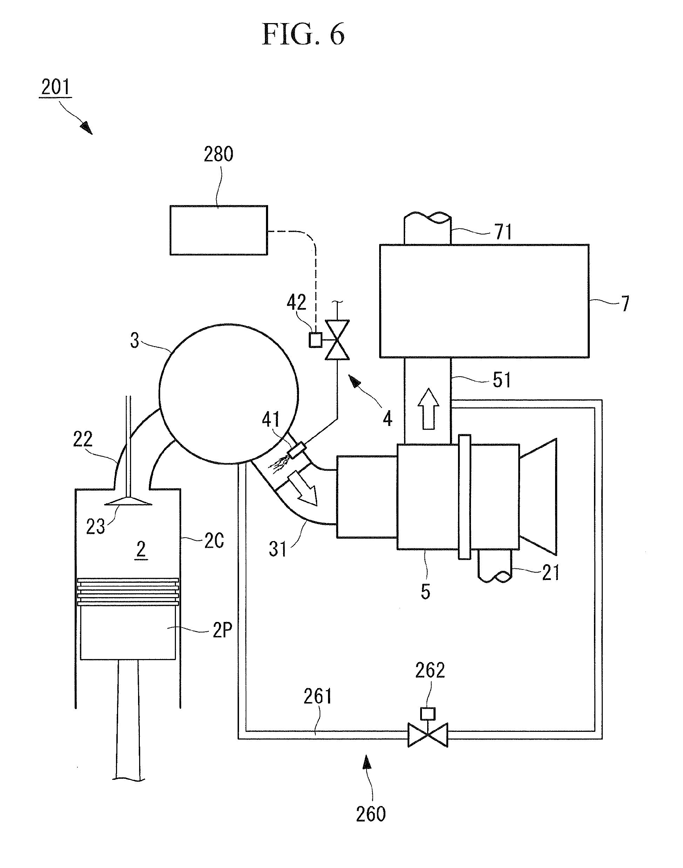

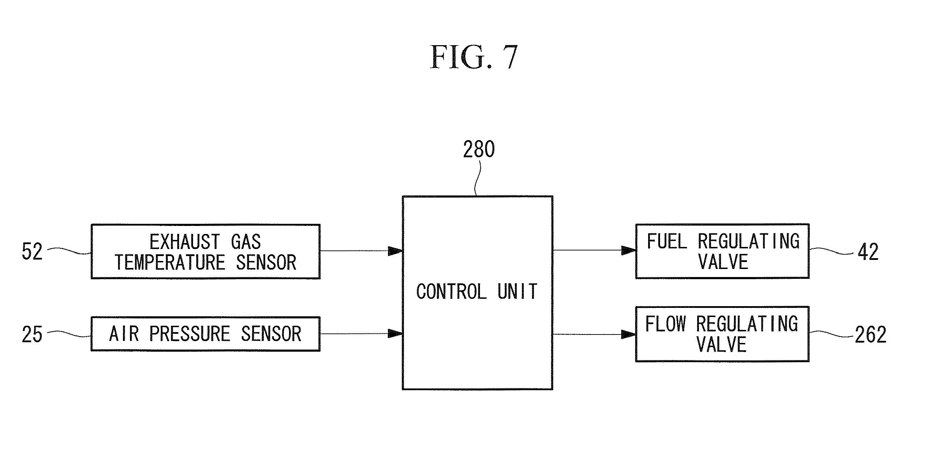

Next, a third embodiment of the present invention is described with reference to Fig. 6 and Fig. 7.
A basic configuration of a marine internal combustion engine of the present embodiment is the same as that of the first embodiment, but a peripheral configuration of a supercharger of the present embodiment is different from that of the first embodiment. Accordingly, in the present embodiment, only the peripheral configuration of the supercharger is described with reference to Fig. 6 and Fig. 7, and description of the other components and the like is omitted.
Fig. 6 is a schematic view for describing a configuration of the marine internal combustion engine according to the present embodiment. Fig. 7 is a block diagram for describing a configuration of a control unit in Fig. 6.
Note that the same components as those of the first embodiment are denoted by the same reference signs, and description thereof is omitted.

As illustrated in Fig. 6 and Fig. 7, a marine internal combustion engine (a marine internal combustion engine with a denitration unit) 201 mainly includes the cylinder unit 2C, the piston unit 2P, the exhaust confluence unit 3, the burner unit 4, the supercharger 5, a bypass unit 260, the denitration unit 7, and a control unit 280.

As illustrated in Fig. 6, the bypass unit 260 causes part of exhaust gas to bypass the supercharger 5, and supplies the exhaust gas to the denitration unit 7.
The bypass unit 260 is provided with a bypass flow path 261 and a flow regulating valve (regulator) 262.

The bypass flow path 261 is a flow path that connects the exhaust confluence unit 3 to the second exhaust flow path 51, and guides the exhaust gas from the exhaust confluence unit 3 to the denitration unit 7. The flow regulating valve 262 is disposed in the bypass flow path 261.

The flow regulating valve 262 regulates the flow rate of the exhaust gas flowing through the bypass flow path 261. The flow regulating valve 262 is adapted to receive, from the control unit 280, a control signal for controlling the valve opening degree.
Note that the configuration of the flow regulating valve 262, to which a known configuration can be applied, is not particularly limited.

As illustrated in Fig. 6 and Fig. 7, the control unit 280 controls the fuel regulating valve 42 and the flow regulating valve 262.
The control unit 280 receives an exhaust gas temperature measured by the exhaust gas temperature sensor 52 and an air pressure measured by the air pressure sensor 25. Meanwhile, the control unit 280 outputs a control signal for controlling the opening degree of the fuel regulating valve 42 and a control signal for controlling the flow rate of the exhaust gas of the flow regulating valve 262.

Next, an operation of the marine internal combustion engine 201 thus configured is schematically described.
When the marine internal combustion engine 201 is operated, as illustrated in Fig. 6, exhaust gas is generated in the combustion chamber 2, and the exhaust gas is discharged from the combustion chamber 2 into the exhaust confluence unit 3 through the exhaust pipe 22.
Part of the exhaust gas in the exhaust confluence unit 3 flows into the bypass flow path 261, and is guided to the second exhaust flow path 51.

In the mean time, fuel is blown out from the nozzle part 41 of the burner unit 4 to the inside of the first exhaust flow path 31, and the fuel is combusted. The exhaust gas that has flown from the exhaust confluence unit 3 into the first exhaust flow path 31 is heated by the heat that is generated when the fuel is combusted, so that the temperature of the exhaust gas rises.

The heated exhaust gas is supplied from the first exhaust flow path 31 to the supercharger 5, and rotationally drives the exhaust turbine (not illustrated) of the supercharger 5. The compressor (not illustrated) disposed coaxially with the exhaust turbine is rotationally driven together with the exhaust turbine, to thereby supercharge air.

The temperature of the exhaust gas that has rotationally driven the exhaust turbine of the supercharger 5 drops correspondingly to the energy that the exhaust gas has lost due to the rotational driving of the exhaust turbine. The exhaust gas with such a temperature drop flows out from the supercharger 5 into the second exhaust flow path 51.

The exhaust gas that has flown into the second exhaust flow path 51 joins the exhaust gas that has flown through the bypass flow path 261, and then flows into the denitration unit 7 to contact the catalyst, whereby NOx contained in the exhaust gas is reduced. After that, the exhaust gas is discharged from the denitration unit 7 to the outside through the third exhaust flow path 71.

Next, the control of the fuel regulating valve 42 and the flow regulating valve 262 by the control unit 280 is described. Note that the control of the fuel regulating valve 42 by the control unit 280 is the same as that of the first embodiment, and hence description thereof is omitted.

The control unit 280 receives a measurement signal of the pressure of the supercharged air supplied to the combustion chamber 2, the pressure being measured by the air pressure sensor 25. On the basis of the received measurement signal, the control unit 280 determines whether or not the pressure of the supercharged air supplied to the combustion chamber 2 falls within a predetermined range.

If the control unit 280 determines that the pressure of the supercharged air supplied to the combustion chamber 2 falls below the predetermined range, the control unit 280 outputs, to the flow regulating valve 262, a control signal for decreasing the flow rate of the exhaust gas in order to increase the pressure of the air.

The flow regulating valve 262 that has received this control signal makes the valve opening degree smaller, to thereby decrease the flow rate of the exhaust gas, so that the ratio of the exhaust gas that flows into the bypass flow path 261 is decreased in the exhaust gas discharged from the combustion chamber 2. In contrast, the ratio of the exhaust gas supplied to the supercharger 5 is increased.
Accordingly, the pressure of the supercharged air supplied from the supercharger 5 to the combustion chamber 2 increases.

On the other hand, if the control unit 280 determines that the pressure of the supercharged air supplied to the combustion chamber 2 exceeds the predetermined range, the control unit 280 outputs, to the flow regulating valve 262, a control signal for increasing the flow rate of the exhaust gas in order to decrease the pressure of the air.

The flow regulating valve 262 that has received this control signal increases the flow rate of the exhaust gas, so that the ratio of the exhaust gas that flows into the bypass flow path 261 is increased in the exhaust gas discharged from the combustion chamber 2. In contrast, the ratio of the exhaust gas supplied to the supercharger 5 is decreased.
Accordingly, the pressure of the supercharged air supplied from the supercharger 5 to the combustion chamber 2 decreases.

Further, as illustrated in Fig. 3, the control unit 280 outputs, to the flow regulating valve 262, the control signals for increasing/decreasing the flow rate of the exhaust gas (scavenging pressure), on the basis of the temperature of the air taken in (suctioned) by the supercharger 5. That is, when the temperature of the air taken in by the supercharger 5 becomes higher, the control unit 280 outputs, to the flow regulating valve 262, the control signal for increasing the flow rate of the exhaust gas (scavenging pressure). When the temperature of the air taken in by the supercharger 5 becomes lower, the control unit 280 outputs, to the flow regulating valve 262, the control signal for decreasing the flow rate of the exhaust gas (scavenging pressure). In other words, the control unit 280 outputs, to the flow regulating valve 262, the control signals for increasing/decreasing the flow rate of the exhaust gas (scavenging pressure) such that the pressure (scavenging pressure) of the supercharged air supplied from the supercharger 5 to the combustion chamber 2 is constant (in the present embodiment, a scavenging pressure corresponding to the temperature in an engine room (for example, 50°C) during marine navigation through a tropical region) irrespective of a temperature change in the air taken in by the supercharger 5.

With the marine internal combustion engine 201 and the operating method thereof according to the present embodiment, as illustrated in Fig. 3, in the case where the engine load is the same, the temperatures of the exhaust gas generated in the combustion chamber 2 and the exhaust gas that flows into the exhaust confluence unit 3 are kept constant irrespective of a temperature change in the air taken in by the supercharger 5. Hence, the amount of fuel injected from the nozzle part 41 of the burner unit 4 can be kept (substantially) constant irrespective of the temperature change in the air taken in by the supercharger 5. Then, the fuel consumed by the nozzle part 41 can be decreased, and the downsizing of the nozzle part 41 can be achieved.

Further, part of the exhaust gas discharged from the combustion chamber 2 flows into the bypass flow path 261, and the other exhaust gas flows into the supercharger 5 after being heated by the combustion of the fuel by the burner unit 4. The part of the exhaust gas that has flown into the bypass flow path 261 flows into the denitration unit 7 together with the exhaust gas that has flown out from the supercharger 5. Accordingly, the amount of fuel that is combusted by the burner unit 4 when the exhaust gas is heated to a predetermined temperature is smaller compared with a method in which part of the exhaust gas is not caused to bypass the supercharger 5. Moreover, because the flow rate of the exhaust gas that flows into the supercharger 5 is regulated, the number of revolutions of the supercharger 5 is adjusted.

Furthermore, because the flow rate of the exhaust gas of the flow regulating valve 262 is controlled on the basis of the pressure of the air supplied to the combustion chamber 2, the ratios of the exhaust gas used for the air supercharging and the exhaust gas that flows into the bypass flow path 261 are adjusted in the exhaust gas discharged from the combustion chamber 2. Accordingly, the pressure of the air supplied from the supercharger 5 to the combustion chamber 2 is controlled so as to fall within a predetermined pressure range.

### {Reference Signs List}

- 1, 101, 201: marine internal combustion engine (marine internal combustion engine with denitration unit)
- 2: combustion chamber
- 4: burner unit
- 5: supercharger
- 6: power generation unit
- 7: denitration unit
- 8, 180, 280: control unit
- 160: power generating turbine unit
- 162: flow regulating valve (regulator)
- 260: bypass unit
- 262: flow regulating valve (regulator)

## Claims

1. An operating method of a marine internal combustion engine, the marine internal combustion engine comprising:
a combustion chamber that receives supply of air and fuel to generate rotational driving force and discharge exhaust gas;
a supercharger that is driven by the exhaust gas discharged from the combustion chamber to supercharge the air supplied to the combustion chamber;
a denitration unit that houses a catalyst that reduces nitrogen oxides contained in the exhaust gas discharged from the supercharger;
a burner unit that is disposed between the combustion chamber and the supercharger, and injects the fuel to the exhaust gas to combust the fuel; and
a power generation unit that is driven by the supercharger to generate electric power,
the operating method comprising increasing/decreasing an amount of power generated by the power generation unit such that a pressure of the supercharged air supplied from the supercharger to the combustion chamber is constant irrespective of a temperature change in the air taken in by the supercharger, in a case where an engine load is the same.

2. An operating method of a marine internal combustion engine, the marine internal combustion engine comprising:
a combustion chamber that receives supply of air and fuel to generate rotational driving force and discharge exhaust gas;
a supercharger that is driven by the exhaust gas discharged from the combustion chamber to supercharge the air supplied to the combustion chamber;
a denitration unit that houses a catalyst that reduces nitrogen oxides contained in the exhaust gas discharged from the supercharger;
a burner unit that is disposed between the combustion chamber and the supercharger, and injects the fuel to the exhaust gas to combust the fuel;
a power generating turbine unit to which the exhaust gas branched from between the combustion chamber and the supercharger is guided, the power generating turbine unit generating electric power on a basis of the guided exhaust gas; and
a regulator that regulates a flow rate of the exhaust gas supplied to the power generating turbine unit,
the operating method comprising increasing/decreasing the flow rate of the exhaust gas supplied to the power generating turbine unit such that a pressure of the supercharged air supplied from the supercharger to the combustion chamber is constant irrespective of a temperature change in the air taken in by the supercharger, in a case where an engine load is the same.

3. An operating method of a marine internal combustion engine, the marine internal combustion engine comprising:
a combustion chamber that receives supply of air and fuel to generate rotational driving force and discharge exhaust gas;
a supercharger that is driven by the exhaust gas discharged from the combustion chamber to supercharge the air supplied to the combustion chamber;
a denitration unit that houses a catalyst that reduces nitrogen oxides contained in the exhaust gas discharged from the supercharger;
a burner unit that is disposed between the combustion chamber and the supercharger, and injects the fuel to the exhaust gas to combust the fuel;
a bypass unit that branches part of the exhaust gas from between the combustion chamber and the burner unit, and causes the part of the exhaust gas to flow into between the supercharger and the denitration unit; and
a regulator that regulates a flow rate of the exhaust gas flowing through the bypass unit,
the operating method comprising increasing/decreasing the flow rate of the exhaust gas flowing through the bypass unit such that a pressure of the supercharged air supplied from the supercharger to the combustion chamber is constant irrespective of a temperature change in the air taken in by the supercharger, in a case where an engine load is the same.

4. A marine internal combustion engine comprising:
a combustion chamber that receives supply of air and fuel to generate rotational driving force and discharge exhaust gas;
a supercharger that is driven by the exhaust gas discharged from the combustion chamber to supercharge the air supplied to the combustion chamber;
a denitration unit that houses a catalyst that reduces nitrogen oxides contained in the exhaust gas discharged from the supercharger;
a burner unit that is disposed between the combustion chamber and the supercharger, and injects the fuel to the exhaust gas to combust the fuel; and
a power generation unit that is driven by the supercharger to generate electric power,
the marine internal combustion engine further comprising a control unit that outputs, to the power generation unit, control signals for increasing/decreasing an amount of generated power such that a pressure of the supercharged air supplied from the supercharger to the combustion chamber is constant irrespective of a temperature change in the air taken in by the supercharger, in a case where an engine load is the same.

5. A marine internal combustion engine comprising:
a combustion chamber that receives supply of air and fuel to generate rotational driving force and discharge exhaust gas;
a supercharger that is driven by the exhaust gas discharged from the combustion chamber to supercharge the air supplied to the combustion chamber;
a denitration unit that houses a catalyst that reduces nitrogen oxides contained in the exhaust gas discharged from the supercharger;
a burner unit that is disposed between the combustion chamber and the supercharger, and injects the fuel to the exhaust gas to combust the fuel;
a power generating turbine unit to which the exhaust gas branched from between the combustion chamber and the supercharger is guided, the power generating turbine unit generating electric power on a basis of the guided exhaust gas; and
a regulator that regulates a flow rate of the exhaust gas supplied to the power generating turbine unit,
the marine internal combustion engine further comprising a control unit that outputs, to the regulator, control signals for increasing/decreasing the flow rate of the exhaust gas supplied to the power generating turbine unit such that a pressure of the supercharged air supplied from the supercharger to the combustion chamber is constant irrespective of a temperature change in the air taken in by the supercharger, in a case where an engine load is the same.

6. A marine internal combustion engine comprising:
a combustion chamber that receives supply of air and fuel to generate rotational driving force and discharge exhaust gas;
a supercharger that is driven by the exhaust gas discharged from the combustion chamber to supercharge the air supplied to the combustion chamber;
a denitration unit that houses a catalyst that reduces nitrogen oxides contained in the exhaust gas discharged from the supercharger;
a burner unit that is disposed between the combustion chamber and the supercharger, and injects the fuel to the exhaust gas to combust the fuel;
a bypass unit that branches part of the exhaust gas from between the combustion chamber and the burner unit, and causes the part of the exhaust gas to flow into between the supercharger and the denitration unit; and
a regulator that regulates a flow rate of the exhaust gas flowing through the bypass unit,
the marine internal combustion engine further comprising a control unit that outputs, to the regulator, control signals for increasing/decreasing the flow rate of the exhaust gas flowing through the bypass unit such that a pressure of the supercharged air supplied from the supercharger to the combustion chamber is constant irrespective of a temperature change in the air taken in by the supercharger, in a case where an engine load is the same.
